# EUROPEAN PATENT APPLICATION

(11) **EP 4 708 554 A1**
(43) Date of publication of application: **11.03.2026**
(21) Application number: 25774815.2
(22) Date of filing: 19.03.2025
(51) Int. Cl.: H01M 50/591, H01M 50/588, H01M 50/211, H01M 50/507, H01M 50/289, H01M 10/04, H01M 50/342

(54) **BATTERY PACK**

(30) Priority: 22.03.2024 KR 20240039923
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2025/003590
(87) International publication number: WO 2025/198343

(57) **Abstract**

Disclosed herein relates to a battery pack for accommodating a cell assembly comprising a pair of external terminals, including: a pack case in which a cell assembly is seated, wherein the pack case includes: a base plate supporting a lower part of the cell assembly; and a protective cap coupled to a center part of the base plate, wherein the protective cap covers an external terminal of each cell assembly accommodated.

## Description

### [Technical Field]

The present disclosure relates to a battery pack accommodating a plurality of cell assemblies including a pair of external terminals.

This application claims the benefit of Korean Patent Application No. 10-2024-0039923, filed on March 22, 2024, the disclosure of which is incorporated herein by reference.

### [Background]

A battery pack applied to an electric vehicle or the like has a structure in which a plurality of cell assemblies including a plurality of secondary batteries are connected in series or parallel to obtain a high power output. In addition, the secondary batteries are capable of repeatedly charging and discharging by electrochemical reactions between components, including electrodes, separators, and electrolytes.

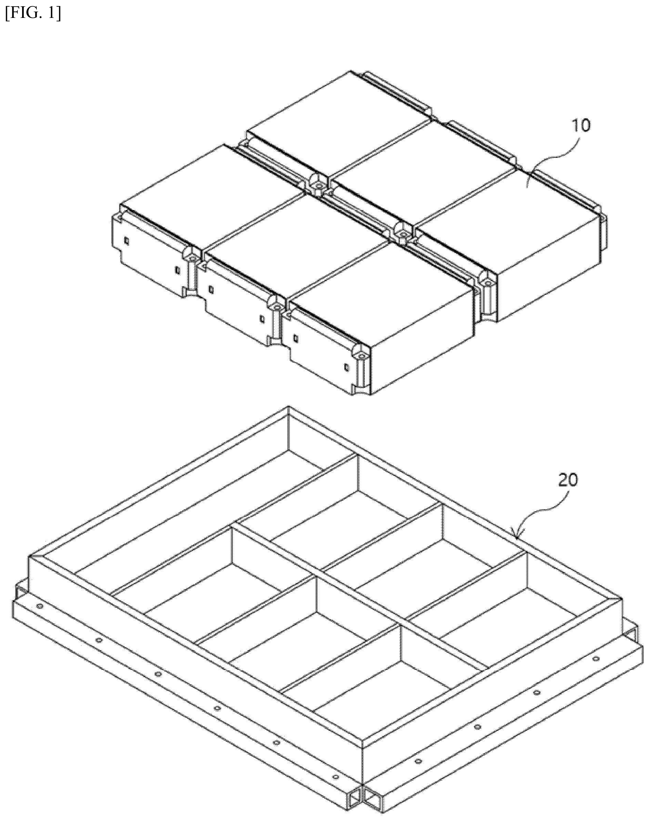

FIG. 1 is a perspective view of a conventional battery pack, wherein the battery pack comprises a plurality of cell assemblies 10 and a pack case 20 for accommodating the cell assemblies 10.

Each cell assembly 10 includes a pair of external terminals, wherein each cell assembly 10 is electrically connected via a separate busbar connecting the external terminals.

Meanwhile, in the event of a short circuit within any one of the cell assemblies 10 accommodated in the pack case 20, a spark accompanied by high heat may be generated. At this time, if the ejection of the spark or the like scatters and touches the busbar, it can short-circuit a large number of cell assemblies 10 in an instant, which can lead to a large explosion or fire.

In particular, since the cell assembly 10 accommodated in most battery packs is disposed so that the external terminals face the center of the pack case 20, it is highly likely that the busbars will be touched by the scattered spark particles. In other words, since the conventional battery pack has a structure in which the busbars are gathered in the center, it is vulnerable to a large fire in the event of a spark or flame caused by a short circuit.

(Prior art reference) Korean Public Patent No. 10-2022-0001228

### [Summary]

### [Technical Problem]

Accordingly, the present disclosure was invented to solve the above-mentioned problems, and aims to provide a battery pack with a configuration that can exclude situations in which spark discharges that are scattered come into contact with busbars and conductors.

Other objects and advantages of the present disclosure will be understood from the following description, which will become more apparent with reference to embodiments of the present disclosure. It will also be readily apparent from that the objects and advantages of the present disclosure may be instantiated by the means and combinations thereof set forth in the claims of the patent.

### [Technical Solution]

According to the present disclosure, there is provided a battery pack for accommodating a cell assembly including a pair of external terminals.

The battery pack includes a pack case in which the cell assembly is seated, wherein the pack case includes: a base plate supporting a lower part of the cell assembly; and a protective cap coupled to a center part of the base plate, wherein the protective cap covers the external terminal of each cell assembly accommodated.

The protective cap may extend across the center part of the base plate and along a longitudinal direction of the pack case.

The plurality of cell assemblies are symmetrical to each other with respect to a width direction of the pack case, and are disposed along a longitudinal direction of the pack case, wherein the protective cap may be provided to cover space between the spaced apart pair of cell assemblies.

The pair of cell assemblies are spaced apart from each other such that one side on which the external terminals are located faces each other, the protective cap may be provided to cover an upper part of the external terminals of the cell assemblies.

The protective cap may include a material having at least one of the properties of heat resistance and fire resistance.

The pack case further includes a connecting busbar electrically connecting any pair of adjacently disposed cell assemblies, wherein both ends of the connecting busbar are connected to the external terminals included on each cell assembly, wherein the protective cap may cover an upper part of the connecting busbar.

The pack case further includes: a busbar cap formed to correspond to a shape of the connecting busbar and covering an upper part of the connecting busbar, wherein the protective cap may cover the upper part of the busbar cap.

The pack case further includes a sheathing member positioned between the connecting busbars and the busbar cap and covering the upper part of the connecting busbars, wherein the sheathing member may include a material having insulating properties.

The base plate includes: a protruding part spaced apart at a predetermined spacing and protrudes along a center part of the pack case, wherein the protective cap may be coupled and fixed with the protruding part.

An upper end height of the protruding part may be at least higher than a height of the external terminals of the cell assembly.

The protective cap includes an insertion hole open to correspond to the location of the protruding part, wherein the protective cap may be coupled to the base plate such that the protruding part is inserted into the insertion hole.

The protruding part includes a coupling groove at its upper end, wherein the protective cap further includes a lower protruding part protruding downwardly corresponding to the location of the protruding part, and having a diameter insertable into the coupling groove, wherein the protective cap may be coupled to the base plate by allowing the lower protruding part to be inserted into the coupling groove.

The pack case includes a center beam extending across the center part and coupled to the base plate, wherein the plurality of cell assemblies are symmetrical relative to each other with respect to the center beam, and disposed along a longitudinal direction of the pack case, wherein the protective cap may be coupled to an upper end of the center beam.

The cell assembly includes: a cell stack having a plurality of cells stacked from which electrode leads are derived; and an end plate coupled to a front and rear surface of the cell stack, wherein the external terminals may be formed on the end plates that is coupled at positions corresponding to the electrode leads to electrically connect with the electrode leads.

The cell assembly may further include a module frame that wraps around a perimeter of the cell stack and couples with the end plates.

The module frame includes: a lower frame supporting a lower part of the cell stack; an upper frame supporting an upper part of the cell stack; and a pair of side frames supporting both sides of the cell stack, wherein the upper frame may include a plurality of opening holes.

### [Advantageous Effects]

According to the present disclosure, a protective cap configuration covering a busbar and a conductor or the like can be utilized to prevent the busbar from directly contacting a spark discharge.

### [Brief Description of the Drawings]

FIG. 1 is a perspective view of a conventional battery pack.
FIG. 2 is a perspective view of a battery pack according to a first embodiment of the present disclosure.
FIG. 3 is a perspective view of the battery pack of FIG. 2 with the protective cap removed.
FIG. 4 is a top view of the battery pack of FIGS. 2 and 3.
FIG. 5 is a perspective view of a cell assembly.
FIG. 6 is a perspective view of a connecting busbar and protective cap.
FIG. 7 is a perspective view of a battery pack according to a second embodiment of the present disclosure.
FIG. 8 is a perspective view of a connecting busbar, a busbar cap, and a protective cap.
FIG. 9 is a perspective view of a battery pack according to a third embodiment of the present disclosure.
FIG. 10 is a top view of the battery pack of FIG. 9.
FIG. 11 is a perspective view of a battery pack according to a fourth embodiment of the present disclosure.
FIG. 12 is a perspective view of the battery pack of FIG. 11 with the protective cap removed.
FIG. 13 is a perspective view of a battery pack according to a fifth embodiment of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

The present disclosure relates to a battery pack accommodating a plurality of cell assemblies including a pair of external terminals.

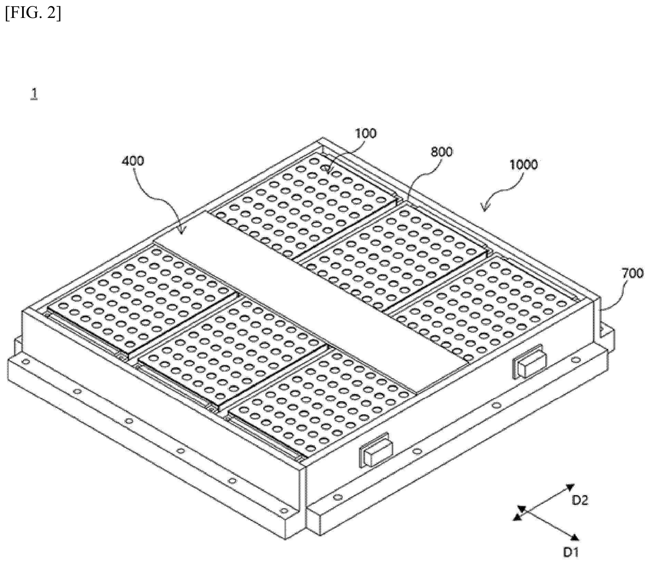

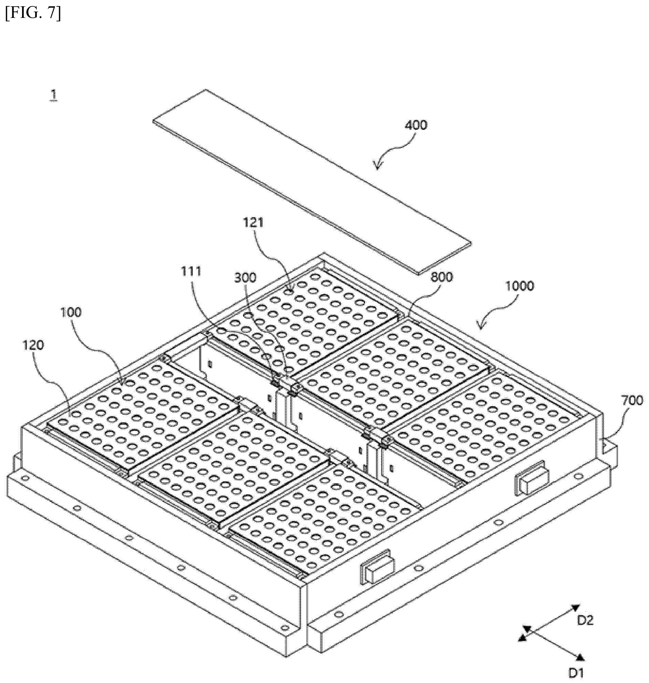

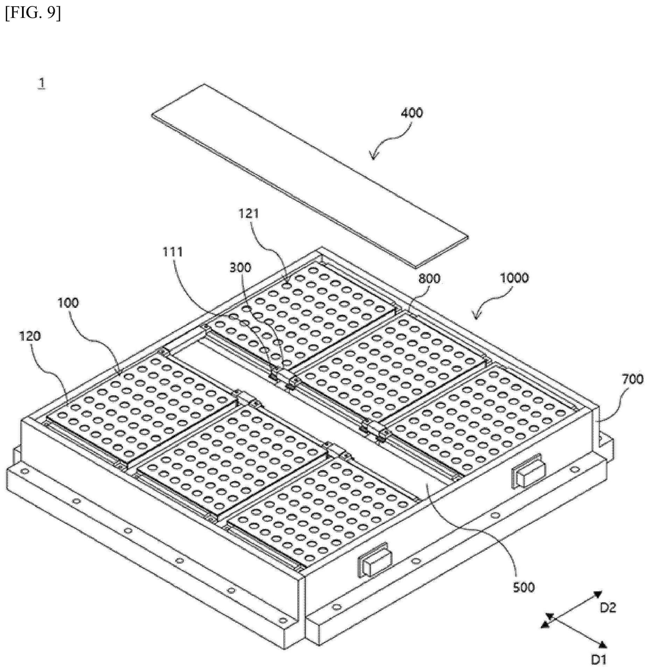

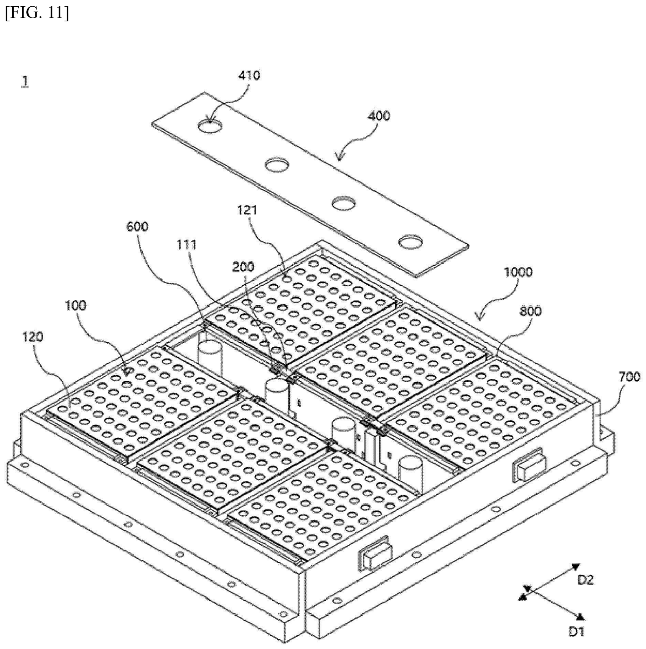

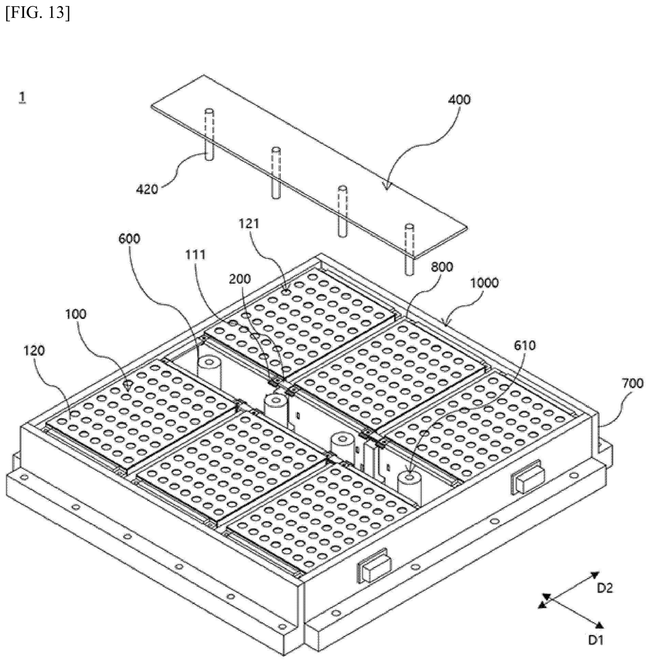

FIGS. 2 through 6 illustrate a battery pack according to a first embodiment of the present disclosure, FIGS. 7 through 8 illustrate a battery pack according to a second embodiment of the present disclosure, FIGS. 9 through 10 illustrate a battery pack according to a third embodiment of the present disclosure, FIGS. 11 through 12 illustrate a battery pack according to a fourth embodiment of the present disclosure, and FIG. 13 illustrates a battery pack according to a fifth embodiment of the present disclosure.

Hereinafter, specific embodiments of a battery pack of the present disclosure will be described in detail with reference to the accompanying drawings. For reference, relative positioning designations such as front-to-back, up-down, left-right, and right-left used in the following description are intended to aid in the understanding of the disclosure and refer to the orientation shown in the drawings unless otherwise defined.

Here, the width direction of the cell assembly is defined as referring to the direction in which the cells are stacked, and the longitudinal direction of the cell assembly is defined as referring to the direction orthogonal to the width direction of the cell assembly, i.e., the direction connecting the two sides where the end plates are coupled.

Further, the width direction (D2) of the pack case refers to the longitudinal direction of the cell assembly accommodated in the pack case, and the longitudinal direction (D1) of the pack case refers to the width direction of the cell assembly accommodated in the pack case.

### (First embodiment)

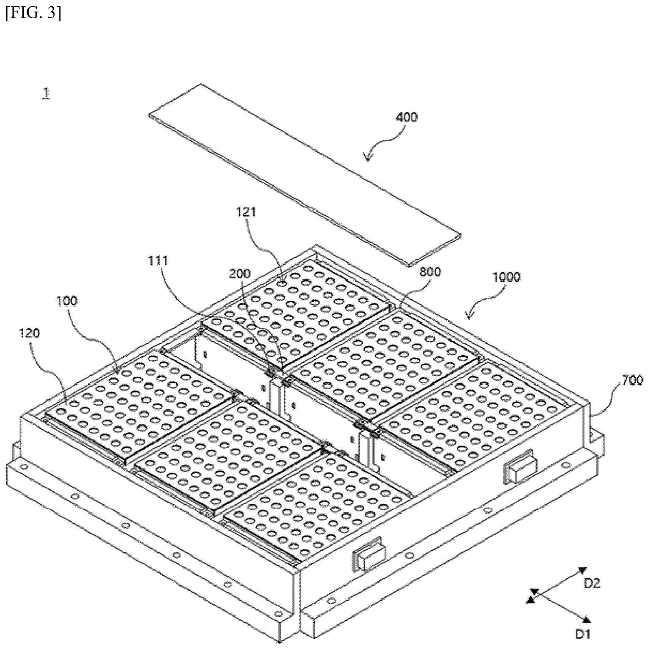

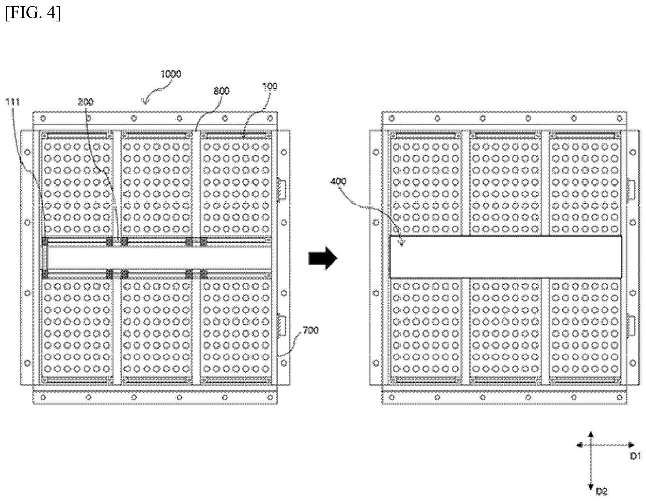

FIG. 2 is a perspective view of a battery pack 1 according to a first embodiment of the present disclosure, FIG. 3 is a perspective view of the protective cap 400 removed from the battery pack 1 of FIG. 2, FIG. 4 is a top view of the battery pack 1 of FIGS. 2 and 3, and FIG. 5 is a perspective view of the cell assembly 100.

The battery pack 1 of the present disclosure includes a pack case 1000 in which the cell assembly 100 is seated.

Additionally, the battery pack 1 of the present disclosure may further include an upper case (not shown) that is coupled to the pack case 1000 to cover an upper part of the cell assembly 100 accommodated in the pack case 1000. However, the upper case is outside the scope of the present disclosure and will not be described in detail.

The cell assembly 100 includes a cell stack, which is a plurality of cells (not shown) stacked in one direction with electrode leads derived therefrom.

Each of the cells includes an electrode assembly stacked alternately with electrodes and separators, an electrode lead connected to the electrode, a case enclosing the electrode assembly such that the electrode lead is drawn outwardly, and an electrolyte filled with the electrode assembly within the case.

The electrode may be a positive electrode having a slurry of a positive electrode active material, binder resin, conductive material, and other additives, etc. applied to at least one side of the current collector, or a negative electrode having a slurry of a negative electrode active material, binder resin, conductive material, and other additives, etc. applied to at least one side of the current collector. Thus, the electrode assembly comprises alternately stacked positive electrodes, separators, and negative electrodes.

The positive electrode active material may include a lithium-containing transition metal oxide, and the negative electrode active material may include a lithium metal, a carbon material, and a metal compound, or a mixture thereof, from which lithium ions may be adsorbed and released.

The separator may employ a conventional porous polymeric film used in lithium secondary batteries.

The case is a sheet material processed into a predetermined shape. In this case, the sheet material is a multilayer structure comprising an outermost outer resin layer made of an insulating material such as polyethylene terephthalate (PET) or nylon, a metal layer made of aluminum to maintain mechanical strength and prevent moisture and oxygen from penetrating, and an inner resin layer made of a polyolefin-based material that is thermally adhesive and acts as a sealing material.

The sheet material comprising the case may have a predetermined adhesive resin layer interposed between the inner resin layer and the metal layer and between the outer resin layer and the metal layer as required. The adhesive resin layer is for smooth attachment between dissimilar materials and is formed in a single layer or in multiple layers, and the material is typically a polyolefin-based resin, or a polyurethane resin may be used for smooth processing, and mixtures thereof may also be employed.

Depending on the shape of the electrode assembly and case, the cells can be categorized as prismatic, pouch-type and cylindrical. However, in the detailed description and drawings of the present disclosure, a pouch-type cell will be described by way of example for ease of understanding.

The front and rear surfaces of the cell stack may be coupled with an end plate 110 configured to protect and support the cell stack.

The cell assembly 100 further includes an external terminal 111 electrically connected to electrode leads drawn out of the cell stack.

The external terminal 111 is formed on the end plate 110, at least one end of which is formed to be exposed outside the end plate 110.

Specifically, the external terminal 111 is formed on an end plate 110 coupled at positions corresponding to electrode leads of the cell stack, among the pair of end plates 110 located at the front and rear surface of the cell assembly 100.

Referring to FIGS. 3 to 5, an external terminal 111 is formed on the end plate 110 located at the front surface of the cell assembly 100.

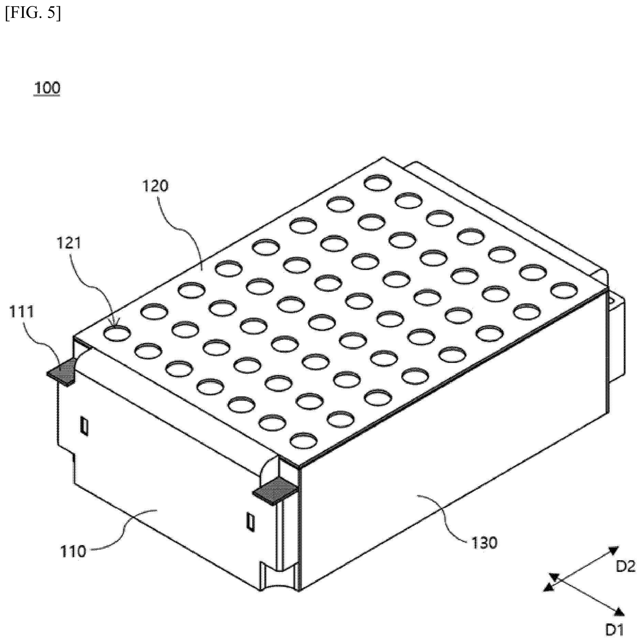

The cell assembly 100 further includes a module frame that wraps around the perimeter of the cell stack, as shown in FIG. 5, and coupled to the end plate 110.

The module frame includes a lower frame (not shown) supporting a lower part of the cell stack, an upper frame 120 supporting an upper part of the cell stack, and a pair of side frames 130 supporting both sides of the cell stack.

The upper frame 120 of the present disclosure includes an opening hole 121, as shown in FIG. 5, which is open to allow gases, flames and spark particles, etc. to be rapidly discharged in the event of a thermal runaway inside the cell assembly 100 due to a short circuit or the like. Thus, in the event of thermal runaway of the cell stack enclosed by the module frame, gases and spark particles and the like may be discharged to the upper part through the opening hole 121.

The plurality of cell assemblies 100 are arranged symmetrically to each other with respect to the width direction D2 of the pack case 1000, and along the longitudinal direction D1 of the pack case 1000. Specifically, each cell assembly 100 is disposed so that the external terminal 111 faces the center of the pack case 1000 as shown in FIGS. 3 and 4. In this case, since the pair of cell assemblies 100 that are symmetrical to each other are disposed at a predetermined distance apart, a hollow space is formed in the center of the pack case 1000 as shown in FIGS. 3 and 4.

In the hollow space, conductors or the like may be located.

The pack case 1000 further includes a connecting busbar 200 for electrically connecting any pair of neighboring cell assemblies 100.

Referring to FIGS. 3 and 4, both ends of any one connecting busbar 200 located between a pair of cell assemblies 100 are connected to one external terminal 111 included on each cell assembly 100.

Each of the cell assemblies 100 is disposed such that both of the external terminals 111 face toward the center of the pack case 1000. Accordingly, the connecting busbars 200 are also located in the center region of the pack case 1000.

According to some embodiments, the pack case 1000 may further include a sheathing member covering an upper part of the busbar.

The sheathing member includes a material having insulating properties, which serves to insulate a portion of the connecting busbar 200 from short circuits and static electricity.

The sheathing member is formed to correspond to the shape of the connecting busbar 200, since it is necessary to cover and insulate the entire upper part of the connecting busbar 200.

The pack case 1000 of the present disclosure includes a plate-shaped base plate supporting a lower part of the cell assembly 100 and side beams 700 coupled to the base plate along edges of the base plate to support side parts of the cell assembly 100 seated on the base plate.

In some embodiments, the battery pack 1 may further include a cross beam 800 interposed between any pair of neighboring cell assemblies 100 and separating each cell assembly 100 relative to the longitudinal direction D1 of the pack case 1000 as shown in FIGS. 2 to 4.

The cross beam 800 may serve to separate the sides of each cell assembly 100 from touching, or may serve to support the sides of each cell assembly 100.

The pack case 1000 of the present disclosure further includes a protective cap 400 that is coupled to a center part of the base plate.

The protective cap 400 serves to cover and protect a portion of the interior space of the pack case 1000.

The protective cap 400 covers the space between the spaced apart pair of cell assemblies 100 at the center part of the base plate as shown in FIGS. 2 through 4.

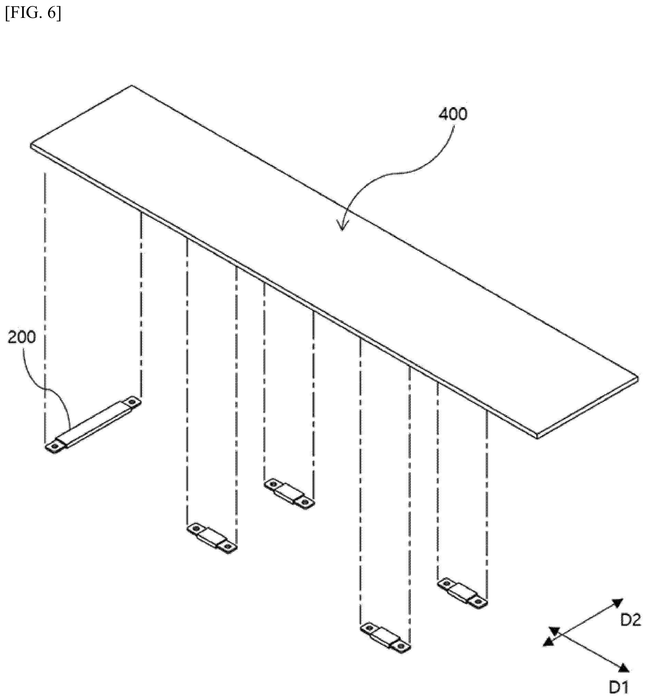

FIG. 6 is a perspective view of the connecting busbar 200 and the protective cap 400.

The protective cap 400 covers the space between the cell assemblies 100 as shown in FIGS. 2, 3, 4, and 6, while covering and protecting the external terminals 111 of each cell assembly 100.

The protective cap 400 is provided to cover both the external terminals 111 of the cell assemblies 100 and the connecting busbar 200 connecting the external terminals 111, as shown in FIG. 4.

The protective cap 400 is formed extending along the longitudinal direction D1 of the pack case 1000 across the center of the base plate, as shown in FIGS. 2 and 3.

For example, the protective cap 400 protects the external terminals 111 of each cell assembly 100 located at the lower part of the protective cap 400 from scattering spark particles, sparks, and hot gases.

The protective cap 400 includes a material having at least one of the properties of heat resistance and fire resistance. For example, the protective cap 400 may include Mica.

Moreover, the protective cap 400 may further include a material having insulating properties. For example, the protective cap 400 may further include fiberglass.

The battery pack 1 of the present disclosure may minimize the impact on the other cell assemblies 100 even if one of the cell assemblies 100 explodes or sparks or the like due to an internal short circuit or the like, and sparks particles or the like are generated, through the configuration of the protective cap 400 covering the upper part of the connecting busbar 200.

Furthermore, the battery pack 1 of the present disclosure can simultaneously protect the external terminals 111 of each cell assembly 100 and the connecting busbar 200, as well as the conductors and the like that may be installed in the center part of the pack case 1000, through the protective cap 400.

### (Second embodiment)

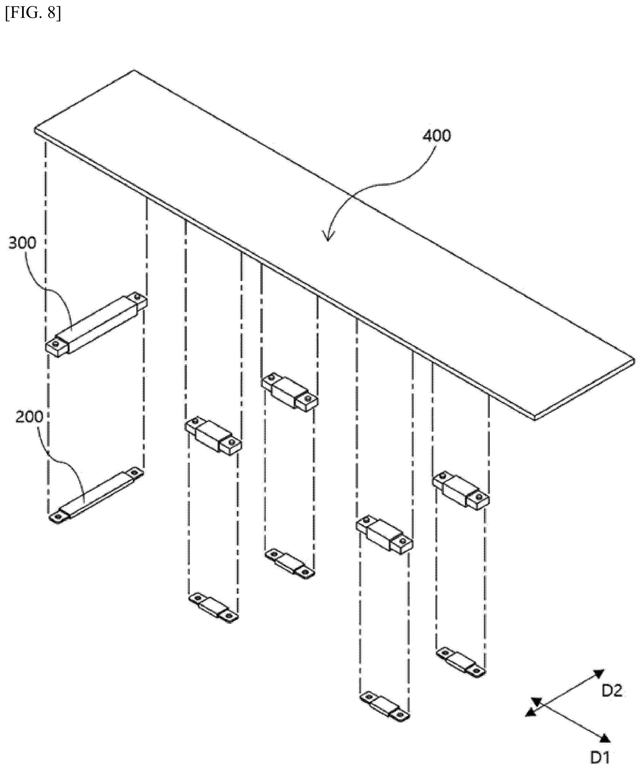

FIG. 7 is a perspective view of the battery pack 1 according to a second embodiment of the present disclosure, and FIG. 8 is a perspective view of the connecting busbar 200, the busbar cap 300, and the protective cap 400.

The pack case 1000 included in the battery pack 1 according to a second embodiment of the present disclosure further includes a busbar cap 300.

The busbar cap 300 is formed to correspond to the shape of the connecting busbar 200 and covers an upper part of the connecting busbar 200, as shown in FIGS. 7 and 8.

The busbar cap 300 covers the connecting busbar 200 to protect the connecting busbar 200 from spark particles, flames, and hot gases approaching from the outside. Accordingly, the busbar cap 300 includes a material having at least one of the properties of heat resistance and fire resistance. For example, the busbar cap 300 may include Mica.

The protective cap 400 covers and protects the external terminal 111, a connecting busbar 200 connecting the external terminal 111, and an upper part of the busbar cap 300 protecting the connecting busbar 200, as shown in FIGS. 7 and 8.

In some embodiments, the pack case 1000 may further include a sheathing member positioned between the connecting busbar 200 and busbar cap 300 to cover an upper part of the connecting busbar 200.

### (Third embodiment)

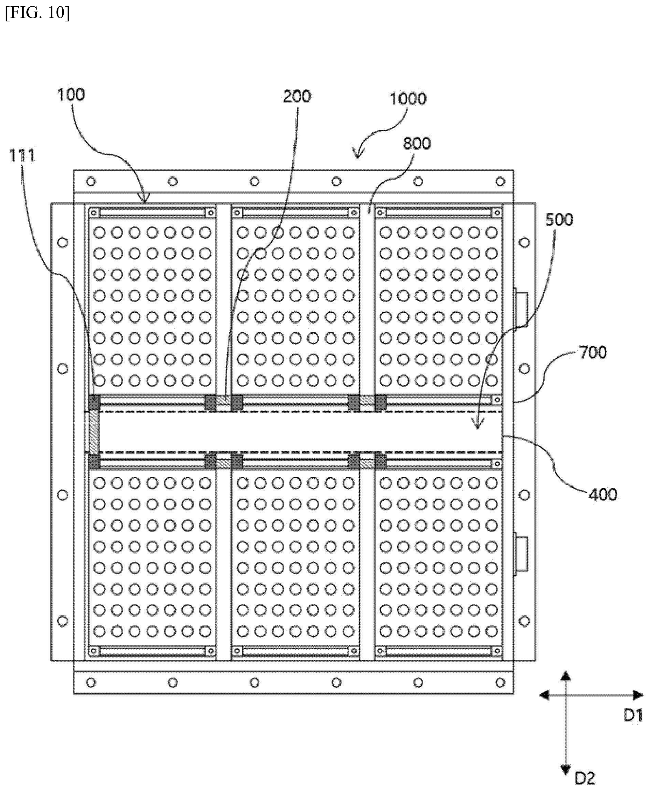

FIG. 9 is a perspective view of a battery pack 1 according to a third embodiment of the present disclosure, and FIG. 10 is a top view of the battery pack 1 of FIG. 9.

The pack case 1000 included in the battery pack 1 according to a third embodiment of the present disclosure further includes a center beam 500.

The center beam 500 is interposed in the hollow space between the cell assemblies 100 spaced apart by a predetermined distance in the width direction D2 of the pack case 1000 and serves to separate each cell assembly 100.

The center beam 500 extends across the center of the pack case 1000 and couples to the base plate, as shown in FIGS. 9 and 10. Thus, with respect to the width direction D2 of the pack case 1000, the plurality of cell assemblies 100 are symmetrical with respect to each other with respect to the center beam 500 and disposed along the longitudinal direction D1 of the pack case 1000.

According to some embodiments, the center beam 500 may be hollow and act as a passageway for gases to move within it.

According to some other embodiments, the center beam 500 may be hollow and contain conductors or the like inside.

The protective cap 400 may be coupled to the upper end of the center beam 500 to protect the external terminals 111, connecting busbar 200, and center beam 500.

Furthermore, the protective cap 400 may protect a busbar cap 300 located on the upper part of the connecting busbar 200, as shown in FIGS. 9 and 10.

### (Fourth embodiment)

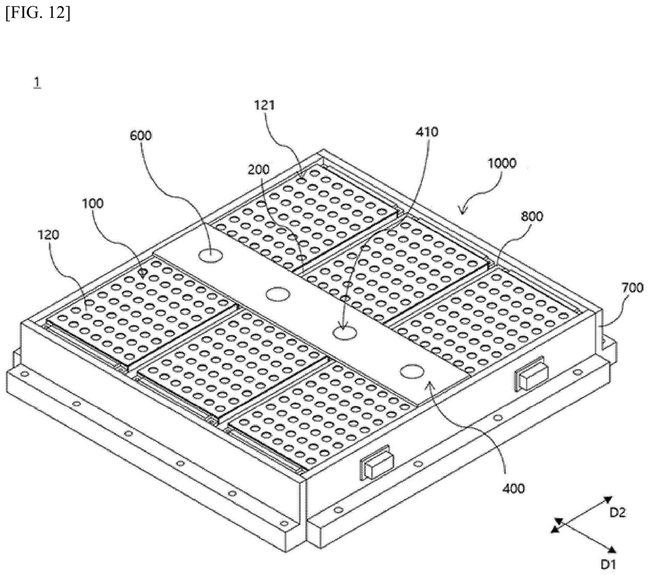

FIG. 11 is a perspective view of the battery pack 1 according to a fourth embodiment of the present disclosure, and FIG. 12 is a perspective view of the protective cap 400 removed from the battery pack 1 of FIG. 11.

The pack case 1000 included in the battery pack 1 according to the fourth embodiment of the present disclosure further includes a protruding part 600.

The protruding part 600 protrude at predetermined spacings along the center of the pack case 1000 as shown in FIGS. 11 and 12.

The protective cap 400 of the present disclosure may be fixed by being coupled to the protruding part 600 protruding towards the upper part from the base plate.

The protective cap 400 includes an insertion hole 410 opened corresponding to the position of the protruding part 600, and the protective cap 400 is coupled to the base plate such that the protruding part 600 is inserted into the insertion hole 410 as shown in FIG. 11.

Preferably, the protruding part 600 has a height that allows it to be inserted into the insertion hole 410 of the protective cap 400 covering the external terminal 111 of the cell assembly 100 and the connecting busbar 200 and the like. Thus, the upper end height of the protruding part 600 is at least as high as the height of the external terminals 111 of the cell assembly 100 accommodated in the pack case 1000.

Furthermore, in some embodiments, in the case of a battery pack 1 with a busbar cap 300, the upper end height of the protruding part 600 is at least higher than the height of the busbar cap 300.

The protruding part 600 is inserted into the insertion hole 410 of the protective cap 400, thereby regulating the movement of the protective cap 400 in a horizontal direction. Thus, the protective cap 400 can be reliably fixed in the center part of the pack case 1000 without any horizontal movement.

### (Fifth embodiment)

FIG. 13 is a perspective view of the battery pack 1 according to a fifth embodiment of the present disclosure.

The pack case 1000 included in the battery pack 1 according to the fifth embodiment of the present disclosure further includes a protruding part 600. Further, the protective cap 400 further includes a lower protruding part 420 formed at a position corresponding to the protruding part 600.

The protruding part 600 includes a coupling groove 610 at its upper end, as shown in FIG. 13, and the lower protruding part 420 protrudes toward the lower part corresponding to the position of the protruding part 600.

The protective cap 400 is coupled to the base plate by the lower protruding part 420 being inserted into a coupling groove 610 of the protruding part 600.

The shape of the lower protruding part 420 corresponds to the shape of the coupling groove 610.

Furthermore, the diameter of the lower protruding part 420 is preferably sized to be insertable into the coupling groove 610.

By the lower protruding part 420 being inserted into the coupling groove 610 of the protruding part 600, its movement in the horizontal direction can be regulated. That is, the protective cap 400 can be reliably fixed in a center position of the pack case 1000 without wobbling in the horizontal direction.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

### (Description of Reference Numerals)

10: (PRIOR ART) CELL ASSEMBLY
20: (PRIOR ART) PACK CASE
1: BATTERY PACK
1000: PACK CASE
100: CELL ASSEMBLY
110: END PLATE
111: EXTERNAL TERMINAL
120: UPPER FRAME
121: OPENING HOLE
130: SIDE FRAME
200: CONNECTING BUSBAR
300: BUSBAR CAP
400: PROTECTIVE CAP
410: INSERTION HOLE
420: LOWER PROTRUDING PART
500: CENTER BEAM
600: PROTRUDING PART
610: COUPLING GROOVE
700: SIDE BEAM
800: CROSS BEAM
D1: PACK CASE LONGITUDINAL DIRECTION
D2: PACK CASE WIDTH DIRECTION

## Claims

1. A battery pack for accommodating a cell assembly comprising a pair of external terminals, comprising:
a pack case in which the cell assembly is seated, wherein
the pack case comprises:
a base plate supporting a lower part of the cell assembly; and
a protective cap coupled to a center part of the base plate, wherein
the protective cap covers the external terminal of each cell assembly accommodated.

2. The battery pack of claim 1, wherein
the protective cap extend across the center part of the base plate and along a longitudinal direction of the pack case.

3. The battery pack of claim 1, wherein
the plurality of cell assemblies are symmetrical to each other with respect to a width direction of the pack case, and are disposed along a longitudinal direction of the pack case, wherein
the protective cap is provided to cover space between the spaced apart pair of cell assemblies.

4. The battery pack of claim 1, wherein
the pair of cell assemblies are spaced apart from each other such that one side on which the external terminals are located faces each other,
the protective cap is provided to cover an upper part of the external terminals of the cell assemblies.

5. The battery pack of claim 1, wherein
the protective cap comprises a material having at least one of the properties of heat resistance and fire resistance.

6. The battery pack of claim 1, wherein
the pack case further comprises:
a connecting busbar electrically connecting any pair of adjacently disposed cell assemblies, wherein
both ends of the connecting busbar are connected to the external terminals included on each cell assembly, wherein
the protective cap covers an upper part of the connecting busbar.

7. The battery pack of claim 6, wherein
the pack case further comprises:
a busbar cap formed to correspond to a shape of the connecting busbar and covering the upper part of the connecting busbar, wherein
the protective cap covers an upper part of the busbar cap.

8. The battery pack of claim 7, wherein
the pack case further comprises a sheathing member positioned between the connecting busbars and the busbar cap and covering the upper part of the connecting busbars, wherein
the sheathing member comprises a material having insulating properties.

9. The battery pack of claim 1, wherein
the base plate comprises:
a protruding part spaced apart at a predetermined spacing and protrudes along a center part of the pack case, wherein
the protective cap is coupled and fixed with the protruding part.

10. The battery pack of claim 9, wherein,
an upper end height of the protruding part is at least higher than a height of the external terminals of the cell assembly.

11. The battery pack of claim 9, wherein
the protective cap comprises an insertion hole open to correspond to the location of the protruding part, wherein
the protective cap is coupled to the base plate such that the protruding part is inserted into the insertion hole.

12. The battery pack of claim 9, wherein
the protruding part comprises a coupling groove at its upper end, wherein
the protective cap further comprises a lower protruding part protruding downwardly corresponding to the location of the protruding part, and having a diameter insertable into the coupling groove, wherein
the protective cap is coupled to the base plate by allowing the lower protruding part to be inserted into the coupling groove.

13. The battery pack of claim 1, wherein
the pack case comprises a center beam extending across the center part and coupled to the base plate, wherein
the plurality of cell assemblies are symmetrical relative to each other with respect to the center beam, and disposed along a longitudinal direction of the pack case, wherein
the protective cap is coupled to an upper end of the center beam.

14. The battery pack of claim 1, wherein
the cell assembly comprises:
a cell stack having a plurality of cells stacked from which electrode leads are derived; and
an end plate coupled to a front and rear surface of the cell stack, wherein
the external terminals are formed on the end plates that is coupled at positions corresponding to the electrode leads to electrically connect with the electrode leads.

15. The battery pack of claim 14, wherein
the cell assembly further comprises a module frame that wraps around a perimeter of the cell stack and couples with the end plates.

16. The battery pack of claim 15, wherein
the module frame comprises:
a lower frame supporting a lower part of the cell stack;
an upper frame supporting an upper part of the cell stack; and
a pair of side frames supporting both sides of the cell stack, wherein
the upper frame comprises a plurality of opening holes.
